# EUROPÄISCHE PATENTSCHRIFT

(11) **EP 1 639 895 B1**
(45) Veröffentlichungstag und Bekanntmachung des Hinweises auf die Patenterteilung: **20.07.2011**
(21) Anmeldenummer: 05018554.5
(22) Anmeldetag: 26.08.2005
(51) Int. Cl.: A21C 11/10, A21C 15/00

(54) **Doppel-Waffelstanzautomat und Verfahren zum Schneiden/Stanzen von Waffeln**
Automatic double-action wafer punching machine and process for cutting/punching wafers.
Presse automatique à double action pour l'estampage de gauffres et procédé pour couper/découper de gauffres

(30) Priorität: 28.08.2004 DE 102004041728
(43) Veröffentlichungstag der Anmeldung: 29.03.2006
(73) Patentinhaber: Lippl, Herbert, 93426 Roding-Oberdorf (DE)
(72) Erfinder: Lippl, Herbert, 93426 Roding-Oberdorf (DE)
(74) Vertreter: Wasmeier, Alfons

(56) Entgegenhaltungen:
- CH-A- 355 749
- CH-A- 436 169
- DE-A1- 1 657 132
- DE-C- 530 125
- US-A- 2 094 718
- US-A- 2 523 178
- US-A- 3 464 299

## Beschreibung

Die Erfindung betrifft ein Verfahren zum Schneiden/Stanzen von Waffeln und einen Doppel-Waffelstanzautomaten zur Durchführung eines solchen Verfahrens.

Das Herstellen von Waffeln erfolgt derzeit mit Hilfe von Sägevorrichtungen, wobei übereinander liegende Waffelplatten stapelweise in Längs- und in Querrichtung in die gewünschte Waffelform geschnitten werden. Bei einem derartigen Vorgehen werden die Sägemesser in einer Richtung nach oben und nach unten mit entsprechendem Vorschub in den Stapel hinein bewegt. Nachteilig an einer derartigen Methode ist, dass der Sägevorgang relativ zeitaufwendig und ungenau ist, da die Gefahr des Verrutschens der erst teilweise gesägten Waffeln sehr groß ist.

Aus der Offenlegungsschrift DE 1 657 132 ist ein Verfahren und eine Vorrichtung zum Stanzen und Verpacken von runden Waffel böden bekannt, bei dem aus einem Magazin jeweils ein Waffelblatt entnommen wird und einer Stanzvorrichtung zugeführt wird. Aus dem zugeführten Waffelblatt werden mittels einer vertikal arbeitenden Stanzplatte runde Waffelböden ausgestanzt, wobei die beim Ausstanzen abfallenden Ecken durch eine Saugvorrichtung abgesaugt werden. Die ausgestanzten runden Waffelböden hingegen werden über ein Transportband weitergeführt und über einen mit Saugnäpfen versehenen Schlitten aufgenommen und anschließend in Kartons verpackt.

Aufgabe der Erfindung ist, die beim Sägen von Waffeln auftretenden Nachteile zu vermeiden und einen Automaten sowie ein Verfahren anzugeben, mit dem ein besonders exaktes, selbsttätiges, plattenweises Schneiden von Waffelplatten und Überführen und Stapeln von gestanzten Waffeln in Kartons erzielt werden kann.

Diese Aufgabe wird gemäß der Erfindung mit den Merkmalen des Kennzeichens des Anspruches 1 gelöst. Weitere Ausgestaltungen der Erfindung sind Gegenstand der Unteransprüche.

Die Funktionsweise des erfindungsgemäßen Doppel-Waffelstanzautomaten verläuft wie folgt: Zur Einleitung des Betriebes wird selbsttätig abgefragt, ob Kartonagen und Waffelplatten vorhanden sind, das Werkzeug verriegelt ist und die Abstapelböden ausgefahren sind. Erst dann kann die Maschine gestartet werden. Zunächst wird eine Waffelplatte auf die Druckplatte verschoben. Dann wird die Druckplatte nach oben gefahren und drückt die vorhandene Waffelplatte gegen die Lochstempel des Werkzeuges W1. Die gestanzte Waffel wird im Lochstempel gehalten, die Druckplatte nach unten gefahren und zugleich der Waffelabfall aufgrund des Stanzvorganges ausgeblasen. Inzwischen fährt das Werkzeug W1 in Richtung der Abstapelvorrichtung von Werkzeug W1 und Werkzeug W2 über die Druckplatte, damit eine neue Waffelplatte gestanzt wird. Während das Werkzeug W2 den Stanzvorgang durchführt, schiebt eine Schiebevorrichtung die gestanzten, auf einer Bodenplatte angeordneten Waffeln vom Werkzeug W1 in den W1 zugeordneten Abstapelkarton. Anschließend fährt die Schiebevorrichtung von Werkzeug W1 zurück. Die Werkzeuge W1 und W2 werden nun wieder in die entgegengesetzte Richtung gefahren, so dass das Werkzeug W2 über dem dem Werkzeug W2 zugeordneten Abstapelkarton steht und sich das Werkzeug W1 wieder über der Druckplatte befindet. Dann wird der Ablauf solange fortgesetzt, bis Karton 1 oder 2 gefüllt ist. Nach Befüllung wird der Karton ausgefahren und der nächste Karton in die Abstapelvorrichtung gestellt. Der gefüllte Karton wird oben zugeklebt und von Hand (oder selbsttätig) mit der Kartonhalterung einschließlich Stapelboden aus der Maschine gehoben und umgedreht, der Stapelboden wird nach oben weggehoben und der Kartonboden zugeklebt. Schließlich wird die Kartonhalterung mit einem neuen Karton bestückt und in die Maschine zurückgeführt.

Ein entscheidendes Element der Erfindung besteht darin, dass die Waffelstanzeinrichtung in der Weise ausgebildet ist, dass die Schneidfläche des Schneidwerkzeuges die volle Fläche der Waffelplatte hat und das Zerteilen einer ganzen Waffelplatte in einem Arbeitshub erfolgt, und dass das Schneidwerkzeug aus messerförmigen Stanzelementen besteht, die die Form der zu stanzenden Einzelwaffeln aufweisen. Dabei ist entscheidend, dass die Schneiden der Stanzwerkzeuge messerscharf ausgebildet sind und aus einem Material extrem hoher Qualität, z.B. Va-Stahl hergestellt sind, um eine möglichst hohe Stanzzeit des Werkzeuges zu erzielen. Durch ein derartiges Stanzwerkzeug ist es möglich, komplizierte Formen einwandfrei zu stanzen bzw. zu schneiden. Um die Schneidkanten der Stanzwerkzeuge weitestgehend zu schonen, ist die Druckplatte, auf die die Schneidwerkzeuge beim Schneiden der Waffeln auftreffen, mit einer elastisch nachgiebigen Auflage versehen bzw. belegt, so dass die Schneidkanten auf diese Auflage, und nicht auf die Metall-Druckplatte unmittelbar auftreffen.

Der Waffelstanzautomat nach der Erfindung besteht aus einer Stapeleinrichtung für Waffelplatten, einer Zuführeinrichtung, die über Pneumatikzylinder betätigt wird und eine Ausblasvorrichtung aufweist, auswechselbaren Stanzmodulen, Aufsteckvorrichtungen für Kartonagen, in die die gestanzten Waffeln verpackt werden und zugehörige Abstapelvorrichtungen sowie auswechselbaren Halterungen für die Kartonagen. Der Rahmen des Stanzautomaten besteht aus Aluminiumprofilen, die Stanzwerkzeuge z.B. aus Chrom-Vanadium-Molybdän-Stahl. Die gestanzten Waffeln werden vakuumgesteuert gehalten und nach unten abgelegt, d.h. der Karton wird von oben befüllt.

Die gestanzten Waffeln werden von einem aus einer Vakuumquelle gespeisten Vakuumsauger nach Durchführung des Stanzvorganges festgehalten, die Ausschiebeplatte bewegt die Vakuumsauger, die z.B. in Form von Manschetten ausgebildet sind, an die gestanzten Waffeln heran und hält sie fest, während die Abstreifplatte die Reste der gestanzten Waffelplatte aufnimmt und dieser Abfall abgeblasen wird. Dann wird die Stanz/Schneidplatte zurückgezogen, so dass die gestanzte Waffel, die vom Vakuumsauger justiert wird, auf einer Ablagevorrichtung aufliegt, das Vakuum abgeschaltet und die Waffel auf der Auflagevorrichtung freigegeben wird.

Mit dem erfindungsgemäßen Doppel-Waffelstanzautomat können Waffeln mit wesentlich exakterer Schneidkante und mit geringerem Abfall erzielt werden als mit vergleichbaren bekannten Maschinen. Des weiteren wird eine höhere Maschinenleistung pro Zeiteinheit erreicht, und es können aufgrund der extrem scharfen Schneidkanten der Schneidbuchsen beliebige Umrissformen der zu stanzenden bzw. schneidenden Waffeln hergestellt werden.

Die Erfindung ergibt sich aus der zugehörigen Zeichnung, deren Figuren zeigen:
- Figur 1: eine schematische Darstellung der Betriebsweise einer Doppel-Waffelstanze nach der Erfindung in Aufsicht,
- Figur 2: eine Vorderansicht der Schemadarstellung der Doppel-Waffelstanze nach Fig. 1,
- Figur 3: eine Seitenansicht der Doppel-Waffelstanze,
- Figur 4: eine Vorderansicht der Doppel-Waffelstanze,
- Figur 5: eine Aufsicht der Doppel-Waffelstanze,
- Figur 6: eine Ansicht der Stanzeinheit von vorne,

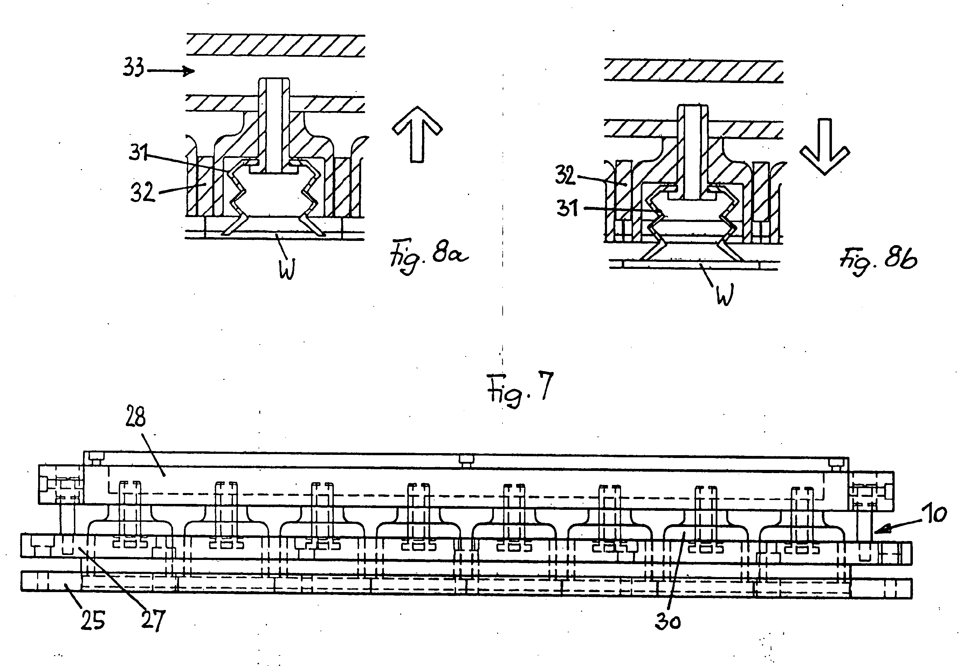

- Figur 7: eine Darstellung der Stanzeinrichtung mit Vakuumjustierung der Waffelablagebuchsen,
- Figuren 8a 8b: eine Darstellung einer Vakuumsaugvorrichtung in zwei Betriebsstellungen der Stanzvorrichtung,

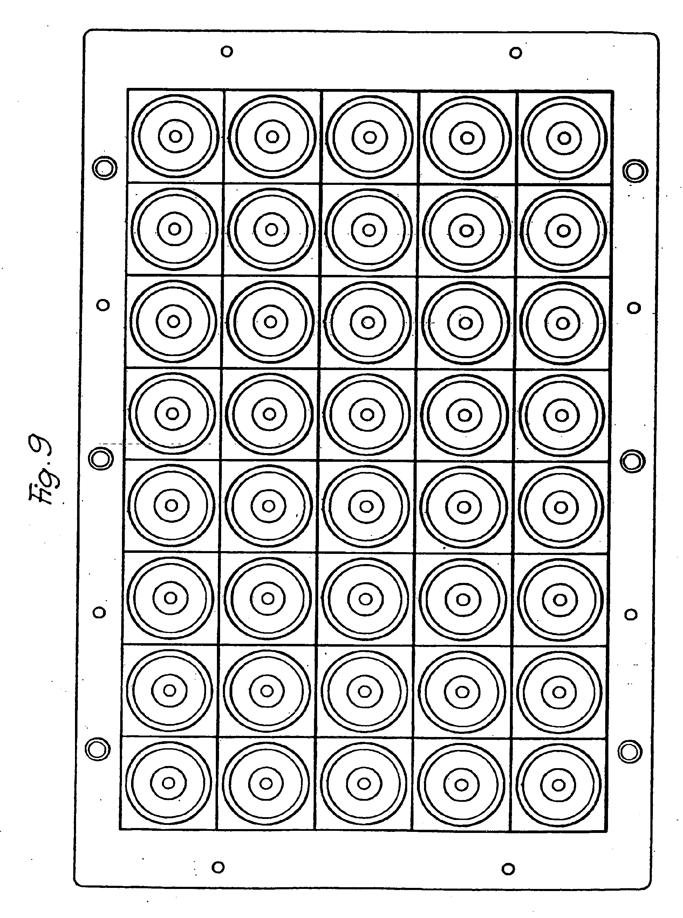

- Figur 9: eine Aufsicht auf die Darstellung nach Fig 7, und

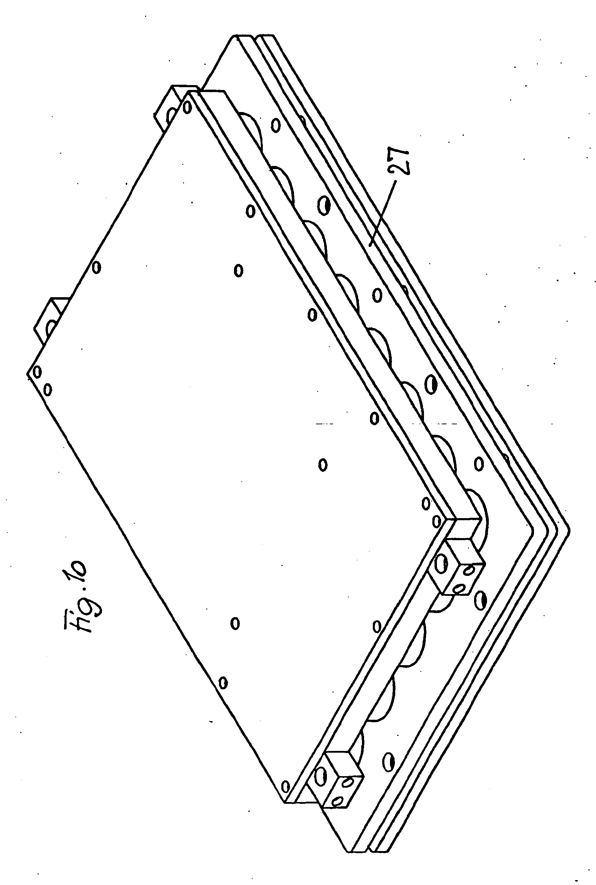

- Figur 10: eine perspektivische Darstellung der Stanz/Schneideinheit.

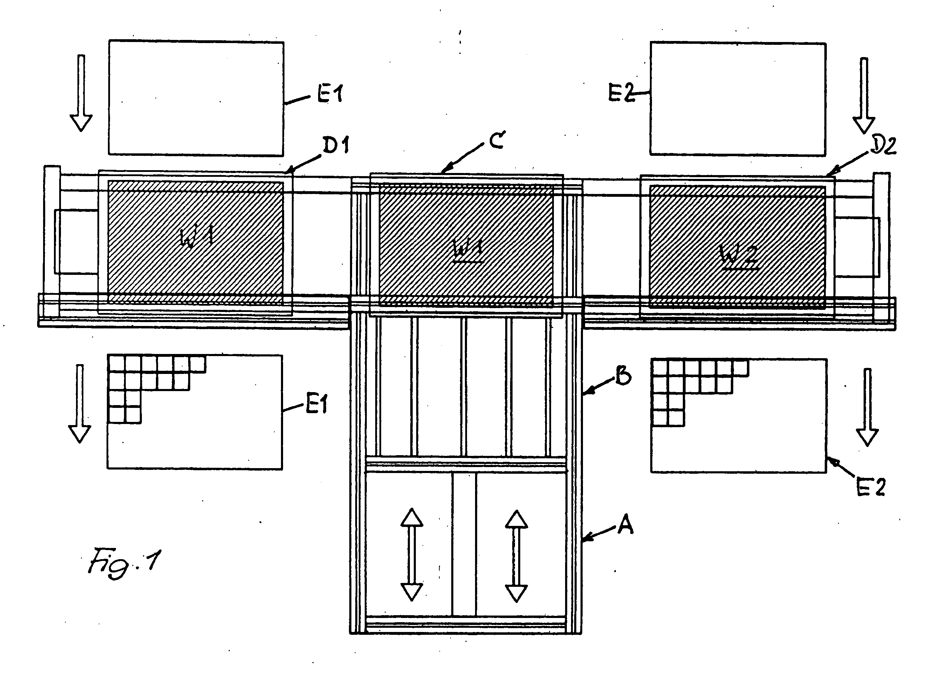

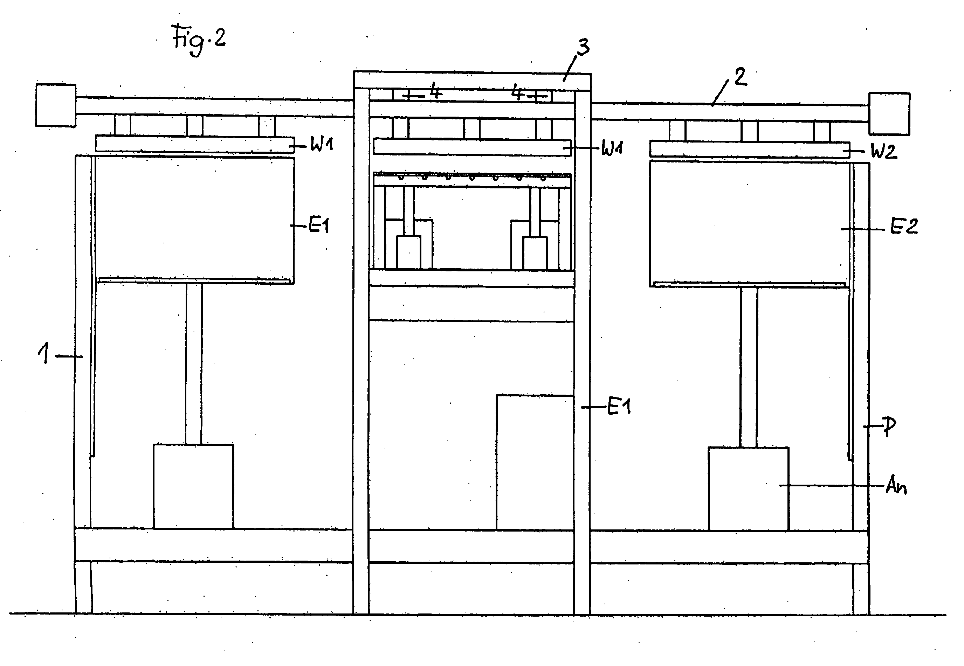

Die Figuren 1 und 2 zeigen das Prinzip der Arbeitsweise der Erfindung. An der Aufgabe- bzw. Stapelstation A wird eine Waffelplatte, die zu Einzelwaffeln bzw. Keksen verarbeitet werden soll, auf eine Druckplatte aufgelegt und über die Zuführstation B einzeln in die Stanzstation C eingefahren. Die Druckplatte wird nach oben gefahren und drückt die Waffelplatte gegen das Stanzwerkzeug, das aus einer Vielzahl von Stanzelementen bzw. Lochstempeln besteht. Das Stanzwerkzeug kann für eine beliebige Waffelform, also neben den herkömmlichen Rechteckformen z.B. als Stern, Tierform, Mond, etc. ausgebildet sind. Die gestanzten Waffeln werden durch Vakuum von oben in dieser Position gehalten. Die Druckplatte fährt nach Beendigung des Ausstanzens wieder nach unten und wird dadurch gereinigt, dass der Abfall weggeblasen wird.

Das Werkzeug mit den gestanzten Keksen wird von der Station C in die Abstapelstation D1 verfahren und mit Hilfe einer Schiebevorrichtung werden die gestanzten Kekse vom Werkzeug W1 in den bereitgestellten Abstapelkarton E1 verfahren sowie in den Karton eingefüllt, dessen Bodenfläche ein Bodenblech aufweist.

Während das Werkzeug W1 (in Figur 1 links) aus der Stanzstation C geschoben wird, wird das Werkzeug W2 (in Figur 1 rechts) im Gegentakt in die Stanzstation C eingeschoben, so dass die Druckplatte mit der Waffelplatte in die Stanzstation C eingefahren und der Stanzvorgang wiederholt werden kann. Dieses Mal wird das Werkzeug W2 nach dem Stanzen in die Abstapelstation D2 (nach rechts) verschoben und die Übergabe der mit W2 gestanzten Waffeln in den Abstapelkarton E2 vorgenommen, so dass abwechselnd der linke Karton E1 und der rechte Karton E2 etagenweise gefüllt werden. Die befüllten Kartons werden abwechselnd und selbsttätig ausgeschoben und vorbereitete, neu aufgesteckte Kartons werden eingeschoben. Die jeweiligen Bodenhälften des ausgeschobenen Kartons werden nun von Hand verklebt, der Abstapelkarton aus der Maschine genommen und umgedreht, anschließend wird der Abstapelboden entfernt und die beidengegenüberliegenden Bodenhälften werden verklebt.

In Verbindung mit den Stanzwerkzeugen sind Auswerfer vorgesehen, die die im Werkzeug vorhandenen Waffelplatten auf ein Ablageblech schieben, während gleichzeitig das Werkzeug W2 bestanzt wird. Der Auswerfer des Werkzeuges W1 fährt somit ein, die Druckplatte fährt nach unten, so dass beide Werkzeuge nach rechts in die Endlage fahren. Das Werkzeug W1 steht nun wieder über der zu stanzenden Waffelplatte und das Werkzeug W2 über der Abstapelplatte 2, damit die Waffelblätter nach unten abgelegt werden können.

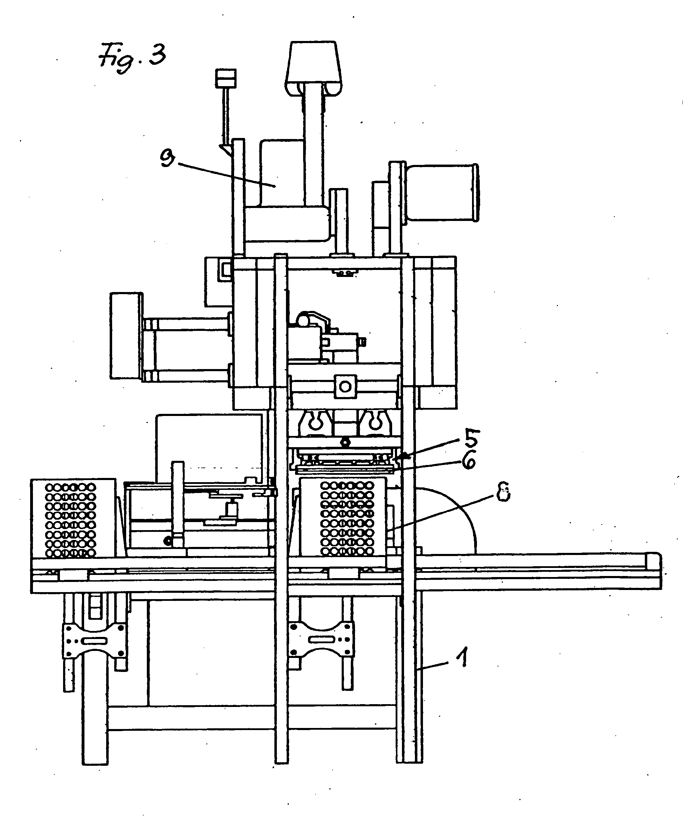

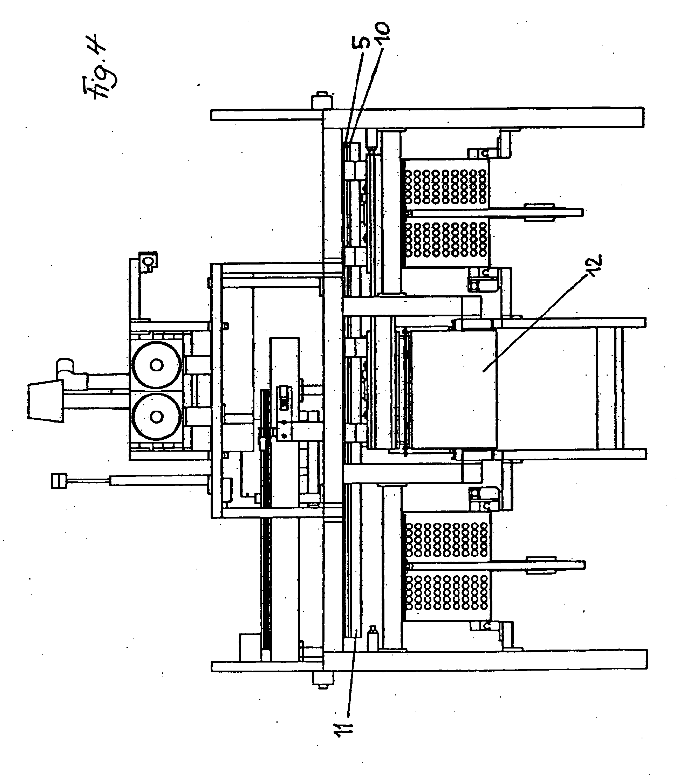

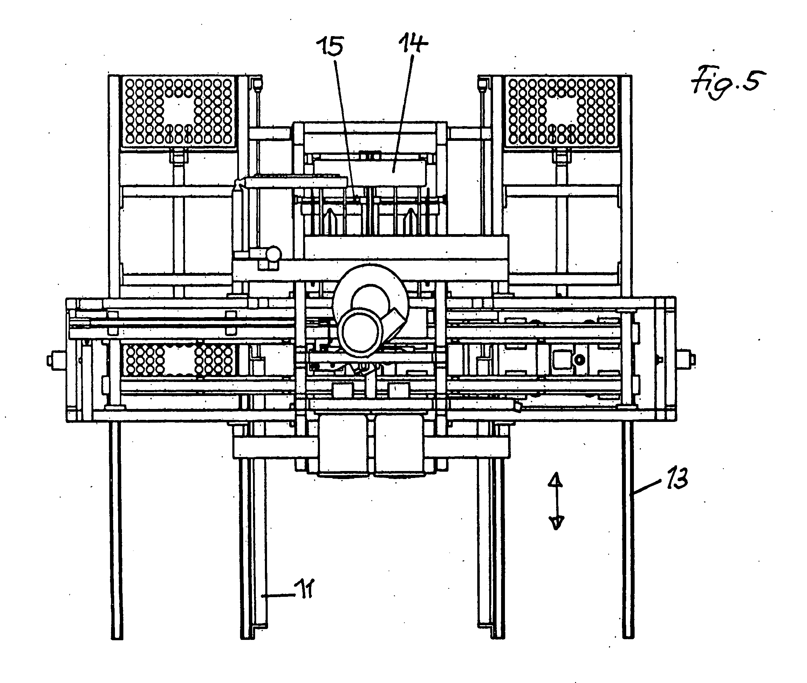

Das Anheben und Absenken der Kartons erfolgt durch mechanischen oder motorischen Antrieb AN in Richtung des Doppelpfeiles P nach Fig. 2. Der Doppel-Waffelstanzautomat ist in einem Rahmengestell 1 aufgenommen. Auf einem Querbalken 2 werden die Werkzeuge W1 und W2 seitlich verfahren. Ein Werkzeugträger 3 nimmt die Werkzeugeinheit über Tragarme 4, 4 auf und positioniert sie in der Stanzstellung. Die Stanzvorrichtung 5, die Abstreifplatte 6 und die Vakuumkammer 7, die Kartonhalterung 8, der Vakuummotor 9, das Stanzwerkzeug 10, die Welle 11 für die Werkzeuge und Absaugung 12, der Kartontisch 13, die Waffelzuführung 14, die Einstellvorrichtung 15 und weitere Elemente des Stanzautomaten sind in den Darstellungen der Figuren 2-5 gezeigt.

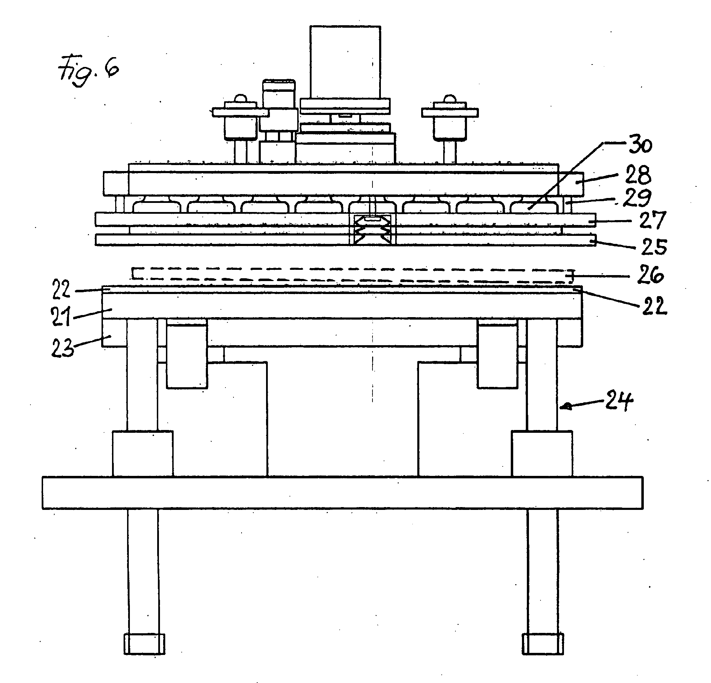

In der Prinzipdarstellung nach Fig. 6 ist die Druckplatte 21 mit elastischer Auflage 22, z.B. in Form einer Gummiplatte, auf einer Befestigungsplatte 23 des Teilrahmens 24 des Maschinengestells angeordnet. Im Abstand über der Druckplatte 21 ist die Abstreifplatte 25 angeordnet, die die Waffelplatte 26 aufnimmt. Über der Abstreifplatte 25 ist die Stanz/Schneidplatte 27 angeordnet, so dass die Waffelplatte 26 zum Stanzen bzw. Schneiden der Waffeln zwischen Abstreifplatte 25 und Stanz/Schneidplatte 27 liegt. Die Stanz/Schneidplatte 27 weist Stanz/Schneidelemente in Form von Stanzbuchsen auf, die aus gehärtetem Va-Stahl bestehen und die messerscharfe Schneidkanten zum Ausstanzen der Waffeln aus der Waffelplatte besitzt. Der Stanz/Schneidplatte 27 ist eine Saugerplatte 28 zugeordnet, die über Federbolzen 29 mit der Stanz/Schneidplatte 27 verbunden ist und die Waffeljustierbuchsen 30 mit den Vakuumsaugelementen 31 sind den Stanz/Schneidbuchsen 32 zugeordnet, so dass die ausgestanzten Waffelteile von den Saugelementen 31 durch Saugwirkung über einen Vakuumanschluss 33 angesaugt und entsprechend der Schemadarstellung nach Fig. 1 gezeigt, mit den seitlich nach links und rechts verfahrbaren Werkzeugen W1 und W2 mitgenommen und in die Aufnahmekartons gefüllt werden.

## Patentansprüche

1. Verfahren zum selbsttätigen Zuführen und Stanzen von Waffelplatten (26) in einem Waffelstanzautomaten, bei dem
a) die Waffelplatten (26) auf einer Aufgabe- oder Stapelstation (A) bereit gestellt werden,
b) die Waffelplatten (26) lagenweise in eine Zuführstation (B) verbracht werden,
c) die Waffelplatten (26) einzeln in einer Doppelstanzstation (C) mit zwei im Gegentakt arbeitenden Stanzwerkzeugen (W1, W2) auf eine Druckplatte (21) eines die Stanzposition einnehmenden Stanzwerkzeuges (W1, W2) aufgelegt oder aufgeschoben werden,
d) die Druckplatte (21) angehoben und die Waffelplatte (26) gegen das Stanzwerkzeug (W1, W2) gedrückt wird,
e) die so gestanzten Waffeln durch Vakuum von oben in der gestanzten Position gehalten werden, während die Druckplatte (21) wieder nach unten in Position gefahren wird,
f) die Druckplatte (21) mittels Druckluftbeblasung von Abfallresten gereinigt wird,
g) das Werkzeug (W1 mit den gestanzten Keksen aus der Doppelstanzstation (C) in die Abstapelstation (D1) verfahren und mit Hilfe einer Schiebervorrichtung die gestanzten Kekse vom Werkzeug (W1) in den bereitgestellten Aufnahmekarton (E1) verschoben werden, der von oben gefüllt wird,
h) gleichzeitig mit dem Verschieben des Werkzeugs (W1) aus der Doppelstanzstation (C) ein Werkzeug (W2) in die Doppelstanzstation (C) eingefahren und der Stanzvorgang mit den Schritten c) - f) wiederholt sowie anschließen in die Abstapelstation (D2) gebracht wird, und die gestanzten Kekse in den Aufnahmekarton (E2) verfahren und eingefüllt werden,
i) die gefüllten Kartons (E1, E2) abwechselnd und etagenweise gefüllt und neu aufgesteckte Kartons eingesetzt werden.

2. Verfahren nach Anspruch 1, **dadurch gekennzeichnet, dass** der Stanzvorgang und damit die Zustellung der Waffelplatte (26) zur Stanz/Schneidplatte (27) von unten nach oben erfolgt, und dass die gestanzten Waffelteile vakuumgesteuert nach unten auf eine bewegliche Abstapelplatte ausgeschoben werden.

3. Doppel-Waffelstanzautomat zur Durchführung des Verfahrens nach Anspruch 1 oder 2, bei dem
a) ein Rahmengestell eine Druckplatte (21) mit darauf angeordneter Auflageplatte (22) aus elastischem Material aufnimmt,
b) die Druckplatte (21) in der Höhe mittels hydraulischem oder pneumatischem Antrieb auf eine von zwei Stanzeinheiten zustellbar ist,
c) jede Stanzeinheit eine Stanz/Schneidplatte (27) und eine der Druckplatte (21) zugeordnete Abstreifplatte (25) aufweist, wobei die zu stanzende Waffelplatte (26) zwischen Druckplatte (21) und Abstreifplatte (25) angeordnet ist, und
d) eine Saugervorrichtung mit Vakuumanschluss (33), Zentrierbuchsen und Sauger (31) mit jeder Stanz/Schneidplatte integriert ist, wobei die Sauger (31) die gestanzten Waffelteile festhalten, während durch die Abstreifplatte (25) der beim Stanzvorgang anfallende Waffelrest beseitigt, insbesondere abgeblasen wird, und
e) die Waffelteile zu den Kartons (E1, E2) befördert und dort abgelegt werden.

4. Doppel-Waffelstanzautomat nach Anspruch 3, **dadurch gekennzeichnet, dass** die Stanz/Schneidbuchsen (32) zwischen Zentrierhülsen der Saugvorrichtung höhenbeweglich angeordnet und geführt sind, und dass die Messerschneiden bündig bis zu den Zentrierhülsen zurückziehbar angeordnet sind.

5. Doppel-Waffelstanzautomat nach Anspruch 3 oder 4, **dadurch gekennzeichnet, dass** Stanz/Schneidplatte (27) und Saugerplatte (28) über Federbolzen nachgiebig miteinander rückfedernd verbunden sind.

6. Doppel-Waffelstanzautomat nach einem der Ansprüche 3 - 5, **dadurch gekennzeichnet, dass** die Schneidbuchsen (32) eine messerscharfe Schneide aus gehärtetem Material, z.B. Va Stahl aufweisen.

7. Doppel-Waffelstanzautomat nach einem der Ansprüche 3 - 6, **dadurch gekennzeichnet, dass** die Stanzvorrichtung stationär angeordnet ist, dass die Schneidfläche des Schneidwerkzeuges (W1, W2) die volle Fläche der Waffelplatte (26) hat und das Zerteilen einer ganzen Waffelplatte (26) auf einmal in einem Arbeitshub erfolgt, und dass der Druckplatte (21) eine Waffelabfall-Beseitigungsvorrichtung zugeordnet ist.

8. Doppel-Waffelstanzautomat nach einem der Ansprüche 3 - 7, **dadurch gekennzeichnet, dass** die Saugvorrichtung (12) eine Saugkammer oder Saugerplatte (28) mit Saugeraufnahme aufweist.

9. Doppel-Waffelstanzautomat nach einem der Ansprüche 3 - 8, **dadurch gekennzeichnet, dass** die Abstreifplatte (25) gegenüber der Stanz/Schneidplatte (27) höhenbeweglich angeordnet ist, und dass Aussparungen in der Abstreifplatte (25) zur mindestens teilweisen Aufnahme der Stanz/Schneidbuchsen (32) ausgebildet sind.

## Claims

1. Method for automatically supplying and punching waffle plates (26) in an automatic waffle punching machine, in which
a) the waffle plates (26) are prepared on a pick-up or stacking station (A)
b) the waffle plates (26) are brought in layers into a supply station (B)
c) the waffle plates (26) are placed or pushed individually in a double punching station (C) with two counter-operating punching tools (W1, W2) onto a pressure plate (21) of a punching tool (W1, W2) which takes up the punching position,
d) the pressure plate (21) is lifted and the waffle plate (26) is pressed against the punching tool (W1, W2),
e) the waffles thus punched are held by vacuum from above in the punched position whilst the pressure plate (21) is moved down again into position
f) the pressure plate (21) is cleaned of waste residues by means of compressed air blasts
g) the tool (W1) is moved with the punched biscuits from the double punching station (C) into the destacking position (D1) and the punched biscuits are then pushed by means of a slider device from the tool (W1) into the prepared holding carton (E1) which is filled from above,
h) at the same time as the tool (W1) is moved out of the double punching station (C) a tool (W2) is moved into the double punching station (C) and the punching process is repeated with steps c) - f) as well as then is brought into the destacking station (D2), and the punched biscuits are moved to fill the holding carton (E2)
i) the filled cartons (E1, E2) are filled in alternation and in stages and newly added cartons are used.

2. Method according to claim 1 **characterised in that** the punching process and thus the delivery of the waffle plate (26) to the punching/cutting plate (27) takes place from the bottom upwards and that the punched waffle parts are ejected vacuum-controlled downwards onto a movable destacking plate.

3. Automatic double waffle punching machine for carrying out the method according to claim 1 or 2 in which
a) a framework holds a pressure plate (21) with a support plate (22) of elastic material mounted thereon,
b) the pressure plate (21) can be delivered vertically by means of a hydraulic or pneumatic drive to one of two punching units
c) each punching unit has a punching/cutting plate (27) and a stripper plate (25) associated with the pressure plate (21) wherein the waffle plate (26) to be punched is mounted between the pressure plate (21) and the stripper plate (25), and
d) a suction device with vacuum connection (33), centring bushes and suction members (31) is integrated with each punching/cutting plate wherein the suction members (31) hold the punched waffle parts secure whilst the waffle residue which accumulates during the punching process is removed, more particularly blown away, by the stripper plate (25) and
e) the waffle parts are conveyed to the cartons (E1, E2) and deposited there.

4. Automatic double waffle punching machine according to claim 3 **characterised in that** the punching/cutting bushes (32) are arranged and guided vertically movable between centring sleeves of the suction device, and that the cutter blades are arranged flush retractable up to the centring sleeves.

5. Automatic double waffle punching machine according to claim 3 or 4 **characterised in that** the punching/cutting plate (27) and suction plate (28) are connected resiliently to one another by spring bolts such that they spring back.,

6. Automatic double waffle punching machine according to one of claims 3 to 5 **characterised in that** the cutting bushes (32) have a knife-sharp blade of hardened material, e.g. Va steel.

7. Automatic double waffle punching machine according to one of claims 3 to 6 **characterised in that** the punching device is mounted stationary, that the cutting surface of the cutting tool (W1, W2) has the complete surface area of the waffle plate (26) and the separation of a complete waffle plate (26) takes place all at once in a single work stroke, and that the pressure plate (21) is assigned a waffle waste removal device.

8. Automatic double waffle punching machine according to one of claims 3 to 7 **characterised in that** the suction device (12) has a suction chamber or a suction plate (28) with suction holder.

9. Automatic double waffle punching machine according to one of claims 3 to 8 **characterised in that** the stripper plate (25) is mounted vertically movable relative to the punching/cutting plate (27) and that recesses are formed in the stripper plate (25) for the at least partial holding of the punching/cutting bushes (32).

## Revendications

1. Procédé pour l'acheminement et l'estampage automatiques de plaques de gaufres (26) dans une machine automatique d'estampage de gaufres, dans lequel :
a) les plaques de gaufres (26) sont préparées dans un poste d'application ou d'empilement (A),
b) les plaques de gaufres (26) sont transférées en couches à un poste d'acheminement (B),
c) les plaques de gaufres (26) sont appliquées ou déplacées par coulissement individuellement dans un poste d'estampage (C) ayant deux outils d'estampage (W1, W2) à fonctionnement symétrique sur une plaque de pression (21) d'un outil d'estampage (W1, W2) adoptant la position d'estampage,
d) la plaque de pression (21) est soulevée et la plaque de gaufre (26) est pressée contre l'outil d'estampage (W1, W2),
e) les gaufres estampées de la sorte sont maintenues par le vide du haut dans la position estampée, tandis que la plaque de pression (21) est à nouveau déplacée en position vers le bas,
f) la plaque de pression (21) est nettoyée des restes de déchets par soufflage à l'air comprimé,
g) l'outil (W1) est déplacé avec les biscuits estampés du poste d'estampage double (C) au poste de décharge (D1) et, à l'aide d'un dispositif de poussée, les biscuits estampés sont déplacés de l'outil (W1) par coulissement dans le carton de réception préparé (E1), qui est rempli par le haut,
h) en même temps que le coulissement de l'outil (W1) hors du poste d'estampage double (C), un outil (W2) est introduit dans le poste d'estampage double (C) et l'opération d'estampage avec les étapes c) à f) est répétée, puis il est amené au poste de décharge (D2) et les biscuits estampés sont déplacés et versés dans le carton de réception (E2), et
i) les cartons remplis (E1, E2) sont remplis alternativement et par étage et des cartons nouvellement mis en place sont utilisés.

2. Procédé selon la revendication 1, **caractérisé en ce que** l'opération d'estampage et, en conséquence, l'approche de la plaque de gaufre (26) vers la plaque d'estampage/coupe (27) s'effectuent de bas en haut et **en ce que** les parties de gaufres estampées sont retirées de manière commandée sous vide vers le bas sur une plaqué de déchargement mobile.

3. Machine automatique d'estampage de gaufres double pour la mise en oeuvre du procédé selon la revendication 1 ou 2, dans laquelle :
a) un châssis reçoit une plaque de pression (21) avec une plaque d'appui (22) disposée en dessus et constituée d'un matériau élastique,
b) la plaque de pression (21) peut être approchée en hauteur au moyen d'un entraînement hydraulique ou pneumatique sur une de deux unités d'estampage,
c) chaque unité d'estampage présente une plaque d'estampage/coupe (27) et une plaque de retrait (25) affectée à la plaque de pression (21), la plaque de gaufre à estamper (26) étant disposée entre la plaque de pression (21) et la plaque de retrait (25), et
d) un dispositif d'aspiration comprenant un raccord à vide (33), des douilles de centrage et des aspirateurs (31) est intégré à chaque plaque d'estampage/coupe, dans lequel les aspirateurs (31) retiennent les parties de gaufre estampées, tandis que le reste de gaufre produit lors de l'opération d'estampage est écarté par la plaque de retrait (25), en particulier écarté par soufflage, et
e) les parties de gaufre sont transportées vers les cartons (E1, E2) et y sont déposées.

4. Machine automatique d'estampage de gaufres double selon la revendication 3, **caractérisée en ce que** les douilles d'estampage/coupe (32) sont agencées et guidées de manière déplaçable en hauteur entre des douilles de centrage du dispositif d'aspiration et **en ce que** les tranchants sont agencés de manière rétractile à fleur jusqu'aux douilles de centrage.

5. Machine automatique d'estampage de gaufres double selon la revendication 3 ou 4, **caractérisée en ce que** la plaque d'estampage/coupe (27) et la plaque d'aspiration (28) sont reliées par retour élastique l'une à l'autre de manière souple via des boulons à ressort.

6. Machine automatique d'estampage de gaufres double selon l'une quelconque des revendications 3 à 5, **caractérisée en ce que** les douilles d'estampage (32) présentent une lame tranchante en matériau durci, par exemple en acier de type Va.

7. Machine automatique d'estampage de gaufres double selon l'une quelconque des revendications 3 à 6, **caractérisée en ce que** le dispositif d'estampage est agencé stationnaire, **en ce que** la surface de coupe de l'outil de coupe (W1, W2) a la surface totale de la plaque de gaufre (26) et la division d'une plaque de gaufre entière (26) s'effectue en une fois en une course de travail et **en ce qu'**un dispositif d'élimination de déchets de gaufres est affecté à la plaque de pression (21).

8. Machine automatique d'estampage de gaufres double selon l'une quelconque des revendications 3 à 7, **caractérisée en ce que** le dispositif d'aspiration (12) présente une chambre d'aspiration ou une plaque d'aspiration (28) avec un logement d'aspirateur.

9. Machine automatique d'estampage de gaufres double selon l'une quelconque des revendications 3 à 8, **caractérisée en ce que** la plaque de retrait (25) est agencée de manière déplaçable en hauteur en face de la plaque d'estampage/coupe (27) et **en ce que** des évidements sont formés dans la plaque de retrait (25) pour la réception au moins partielle des douilles d'estampage/coupe (32).
